# EUROPEAN PATENT APPLICATION

(11) **EP 1 696 292 A1**
(43) Date of publication of application: **30.08.2006**
(21) Application number: 06002270.4
(22) Date of filing: 03.02.2006
(51) Int. Cl.: G05B 19/418, H04L 12/28, H04Q 9/02

(54) **Method of controlling different home devices using single controller and system thereof**

(30) Priority: 24.02.2005 KR 2005015467
(71) Applicant: Samsung Electronics Co., Ltd., Suwon-si, Gyeonggi-Do (KR)
(72) Inventor: Lee, Sung-jin, Yongin-si, Gyeonggi-do (KR); Park, In-ho 644-101 Sinnamusil 6danji Sinwon Apt., Suwon-si Gyeonggi-do (KR); Lee, Sang-ho, Dongjak-gu Seoul (KR)
(74) Representative: Grünecker, Kinkeldey, Stockmair & Schwanhäusser Anwaltssozietät

(57) **Abstract**

A method and system for controlling different home devices using a single controller, wherein the controller selects a device to control and controls only the selected device.

## Description

### BACKGROUND OF THE INVENTION

### 1. Field of the Invention

Methods and systems consistent with the present invention relate to controlling home devices and more specifically, to controlling different home devices by using a single remote controller.

### 2. Description of the Related Art:

In a home network system using a plurality of home devices, if there are n home devices using a controller, there should be n controllers corresponding thereto. In this case, since a user should select and control the controller suited to the corresponding home device each time a user controls different kinds of home devices, the user suffers the inconvenience of controlling the various home devices. Also, a user must suffer from the inconvenience of having to learn how to separately operate the corresponding controller.

Separate controllers are required for each home device because as a result of mapping a control pulse code on a key by the existing controller method, the key of the set controller generates only one control code. In addition, a smart controller, for example, Philips iPronto, which overcomes such a problem using a graphic user interface (GUI), also has a problem that ordinary users cannot easily operate it according to their intuitive recognition. Also, since several selection steps are required in order to perform a specified function through the smart controller, there are problems that the operations thereof are still inconvenient and requires a great amount of time.

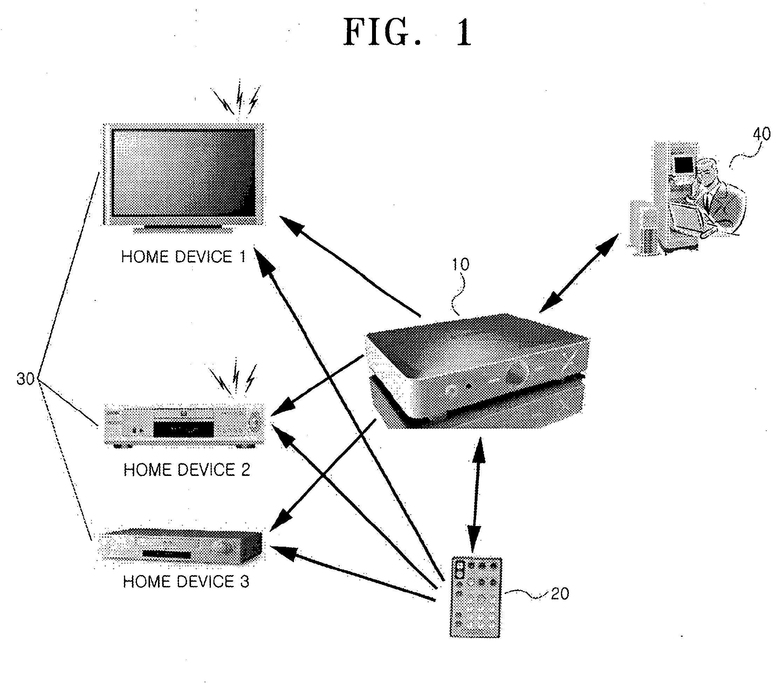

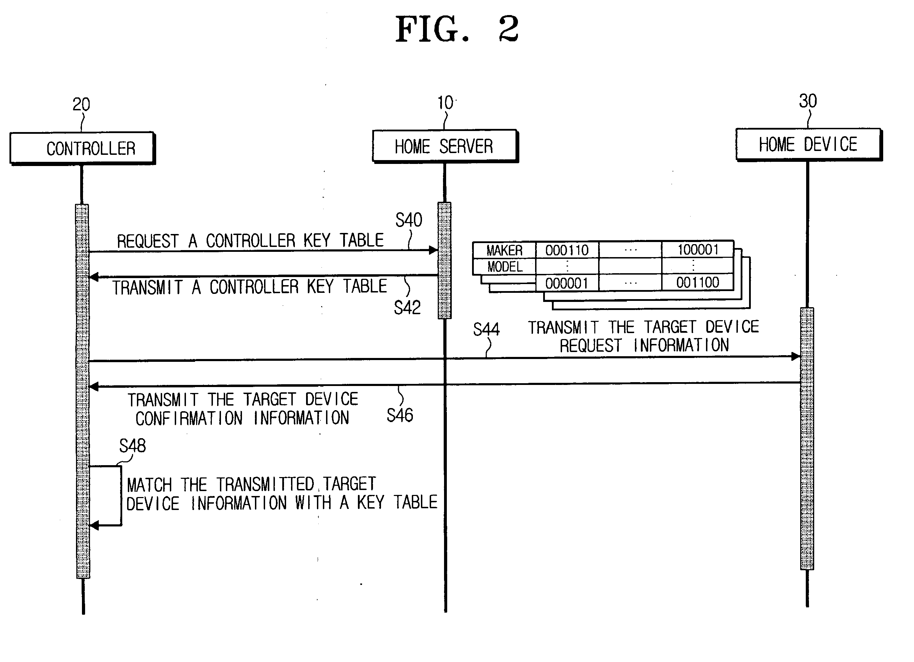

One conventional embodiment which overcomes the above problems is illustrated in FIG. 1 and FIG. 2. FIG. 1 is a schematic diagram illustrating a system for controlling a home device, wherein the home device control system includes a home server 10, a controller 20, a service provider 40 and a plurality of home devices 30. The home server 10 transmits a media source to the home devices 30 and the home devices 30 perform the transmitted media source, on the other hand, the controller 20 controls the home devices 30.

The home server 10 is composed to receive a profile according to each home device from the home device 30, to receive the key data for the corresponding home device from a service provider 40 and to make up a controller key mapping table wherein the key data according to each home device is mapped.

Also, the controller 20 is composed to receive the key mapping table from the home server 10 and the corresponding home device information from the home device 30, to combine the key mapping table with the home device information, and to generate a home device control signal.

The process for controlling a plurality of home devices using a single controller by using the above-described system is illustrated in FIG. 2. FIG. 2 is a diagram illustrating a message sequence for controlling a plurality of conventional home devices using a single controller, wherein when the controller 20 requests a controller key mapping table from the home server 10 (S40), accordingly, the home server 10 transmits the controller key mapping table to the controller 20 (S42).

When the controller 20 transmits a message requesting home device information from the home device 30 (Target Device) (S44), accordingly, the home device 30 transmits the home device information to the controller 20 (S46).

Thereafter, the controller 20 matches the home device information transmitted from the home device 30 with the control key mapping table transmitted from the home server 10 in S48.

Thereafter, the controller 20 is set to be capable of controlling the operation of the home device 30 by transmitting the home device control signal to the home device 30.

### SUMMARY OF THE INVENTION

The present invention provides a convenient method for selecting and controlling a remote controller and a home device to be controlled and a system thereof, when controlling various home equipment by using a single remote controller.

The method of controlling different home devices using a single remote controller according to one exemplary embodiment of the present invention includes requesting a device to be controlled by the remote controller by sending a request signal to the device; the remote controller answering the device accepting the request; and the remote controller controlling the device accepting the request by the remote controller.

The remote controller answering the device accepting the request includes the device receiving the request signal; the device indicating whether the request signal is received; and answering the device accepting the request by the remote controller.

Also, the remote controller controlling the device accepting the request by the remote controller includes the remote controller receiving an answer signal from the device accepting the request; the remote controller indicating whether the answer signal is received; and the remote controller controlling the device accepting the request.

The indications as to whether the request signal and the answer signal are received are indicated by a flickering of a light emitting diode (LED) of the remote controller and the device; and the remote controller controls according to each different key code for each device and when the remote controller controls the device, the device is controlled by transmitting the key data, corresponding to the key code of the device accepting the request, to the device.

A plurality of home device control systems using a single remote controller according to one exemplary embodiment of the present invention is composed to control the remote controller with a key input portion including a request key for requesting a device to be controlled, and the corresponding device answering the request signal of the remote controller by composing a plurality of devices composed to transmit the corresponding answer signal when receiving the control device request signal of the remote controller.

The device further includes an LED and thus, when receiving the request signal from the remote controller, indicates whether the request signal is received by flickering the LED. At the same time, the remote controller is composed to further include an LED and thus, when receiving the answer signal from the device, indicates whether the answer signal is received by flickering the LED of the remote controller.

Further, the remote controller controls according to each different key code for each device when the remote controller controls the device, and the remote controller controls by transmitting the key data corresponding to the key code of the device accepting the request to the device.

### BRIEF DESCRIPTION OF THE DRAWINGS

Exemplary embodiments of the invention will be described in detail with reference to the following drawings in which like reference numerals refer to like elements, and wherein:

FIG. 1 is a schematic diagram illustrating a system for controlling a home device;

FIG. 2 is a diagram illustrating a message sequence for controlling a plurality of conventional home devices using a single controller;

FIG. 3 is a schematic diagram illustrating an operation of a plurality of home devices using a single controller according to an exemplary embodiment of the present invention; and

FIG. 4 is a message sequence chart in a control method of a plurality of home devices using a single controller according to an exemplary embodiment of the present invention.

### DETAILED DESCRIPTION OF THE EXEMPLARY EMBODIMENTS

With reference to the appended drawings hereunder, exemplary embodiments of the present invention will be described in detail.

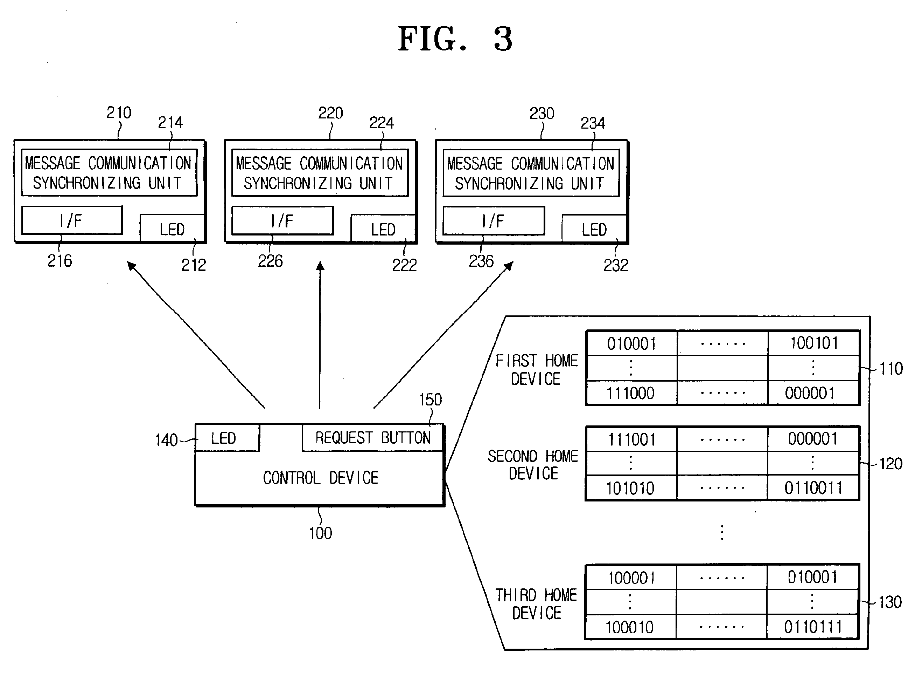

FIG. 3 is a schematic diagram illustrating an operation of a plurality of home devices using a single controller. As illustrated, the home device control system includes a plurality of home devices, e.g., a first home device 210, a second home device 220, and a third home device 230 and a control device 100 for controlling the home devices 210, 220, and 230.

The home devices 210, 220, and 230 store device information (e.g., manufacturing company, model, etc.) for the corresponding device in an internal memory (not shown). The home devices 210, 220 and 230 include LED's [[, ,]] 212, 222, and 232, message communication synchronizing units 214, 224, and 234 for synchronizing a message, and two-way interfaces 216, 226, and 236, respectively.

The message communication synchronizing units 214, 224, and 234 and the two-way interfaces 216, 226, and 236 perform functions to process messages from the control device 100, a message communication synchronization and a protocol.

When the home devices 210, 220, and 230 are requested to operate as a Target Device by the control device 100 through the two-way interfaces 216, 226, and 236, the home devices 210, 220, and 230 flicker the corresponding LED and transmit a Sync Message to the control device 100. When the control device 100 responds by transmitting an Ack Message, the home devices 210, 220 and 230 transmit a Target Device answering message with the corresponding device information from the respective message communication synchronizing unit 214, 224, and 234 to the control device 100 through the message communication synchronizing process. Thereafter, the home devices 210, 220 and 230 are operated according to key data transmitted from the control device 100.

The control device 100 stores the device information for the respective home devices 210, 220, and 230 and key tables 110, 120, and 130 according to each device information. The device information and the key tables can be generated by relevant data received from a home server 10 and a service provider 40, as shown in the prior art, and thus, the detailed explanation thereof is omitted herein. That is, the control device 100 is explained as having already stored the information for each device and the key tables 110, 120, and 130 for each device.

In order to select the Target Device, the control device 100 includes a key input unit (not shown) including a Target Device Request Button 150, capable of requesting the Target Device among the corresponding home devices 210, 220, and 230, and an LED 140.

When the Target Device Request Button 150 is input, the Target Device request data is transmitted to the home devices 210, 220, and 230 to be controlled. When the Sync Message is received from the corresponding home devices 210, 220, and 230, the Ack Message is transmitted to the corresponding home devices 210, 220, and 230 through the message communication synchronizing process. Thereafter, when the Target Device answer message is received with the corresponding device information from the home devices 210, 220, and 230, the control device 100 indicates that the work for selecting home devices is completed by flickering the LED 140 and at the same time, the control device 100 controls the corresponding home device to be operated by reading the key data according to the home device information with reference to the device information of the corresponding home device and transmitting the key data.

In the present invention, only a small number of key data are requested for operating the corresponding home device and thus, the key data of the key tables 110, 120, and 130, corresponding to each home device, are to be composed to be mutually different. That is, even though the key data are transmitted by selecting the Target Device in plural, they are transmitted having different key data so that only the finally selected home device can operate.

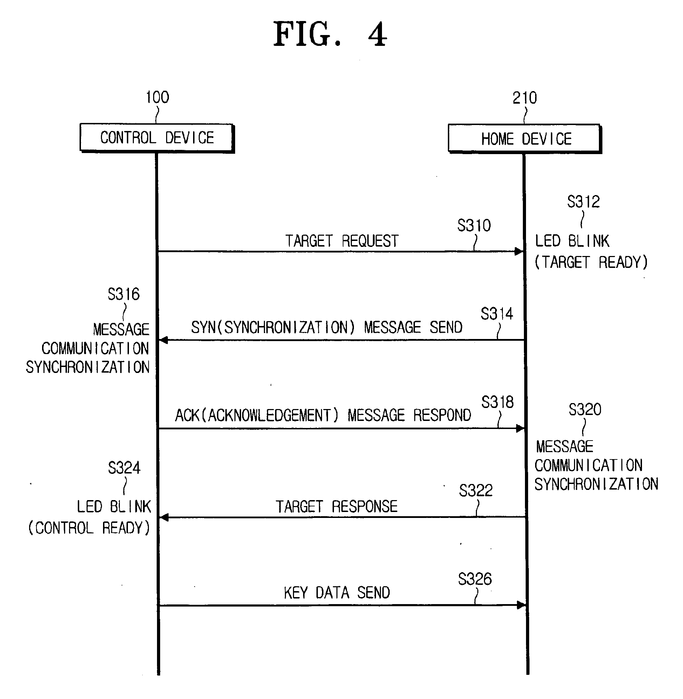

With reference to Fig. 4, a process in which the control device 100 selects the corresponding home device will be described in detail.

FIG. 4 is a diagram illustrating a message sequence chart in a control method of a plurality of home devices using a single controller. In this explanation, the process to select the first home device 210 as the Target Device and to control the first home device 210 will be described.

First, when the Target Device Request Button 150 is input, the control device 100 requests the first home device 210 to be the Target Device (S310).

In S310, while flickering the LED 212 as an indication that the message to become the Target Device is received (S312), the first home device 210 receives the request to be the Target Device and transmits the synchronizing message to the control device 100 (S314).

In response to receiving the synchronizing message (S316), the control device 100 transmits the Ack Message to the first, home device 210 through the message communication synchronizing process (S318 and S320). The first home device 210 transmits the device information of the first home device 210 in the Target Device answer message to the control device 100 through the message communication synchronizing process (S322). The device information is composed to include the manufacturing company, the model, etc.

In S322, the control device 100 receives the device information of the first home device 210 in the Target Device answer message and indicates that selection of home devices is completed by flickering the LED 140 (S324). At the same time, the control device 100 controls the first home device 210 to be operated, by reading the key data according to the device information, i.e., the key data for the first home device210, with reference to the device information of the corresponding home device and transmitting the key data (S326).

Also, since a signal interference or a malfunction may occur during the period for setting the control device by the signal received from another control device, as described above, after S314, signal interference is prevented by ignoring the signal transmitted from another control device.

If such a process as described above is repeated, other home devices, e.g., the second home device 220 and the third home device 230 can be controlled.

As described above, the key data according to the device information (e.g., manufacturing company, model, etc.) of the respective home devices are stored in the control device, and the corresponding key table is read and controlled by receiving the device information of the home device. However, the key table of the control device can be stored according to the respective device numbers. That is, without using the device information, the present invention can be used by classifying the respective home devices into a first home device, a second home device and a third home device, etc, while simultaneously storing the key tables matching with the first, second and third home devices even in the control device

As described above, according to a method of controlling different home devices using a single controller and a device thereof in the present invention, the Target Device can be easily selected and controlled in the home network system by means of a single controller. Therefore, a great number of controllers are not required. Furthermore, a user is not required to learn how to use a great number of controllers.

Although an exemplary embodiment of the present invention has been described, it will be understood by those skilled in the art that the present invention should not be limited to the described exemplary embodiment, but various changes and modifications can be made within the spirit and scope of the present invention as defined by the appended claims.

## Claims

1. A method of controlling a plurality of devices using a single remote controller, the method comprising:
requesting a device to be controlled by the remote controller by sending a request signal to the device;
answering the device accepting the request signal by the remote controller; and
controlling the device accepting the request signal by the remote controller.

2. The method according to claim 1, wherein the answering the device accepting the request signal comprises:
receiving at the device the request signal;
indicating at the device whether the request signal is received; and
answering the device accepting the request signal by the remote controller.

3. The method according to claim 1, wherein the controlling the device accepting the request signal comprises:
receiving at the remote controller an answer signal from the device accepting the request signal;
indicating at the remote controller whether the answer signal is received; and
controlling the device accepting the request signal by the remote controller.

4. The method according to claim 3, wherein the indicating whether the request signal is received comprises flickering a light emitting diode (LED) of the device receiving the request signal.

5. The method according to claim 3, wherein the indicating whether the answer signal is received is comprises flickering an LED of the remote controller.

6. The method according to claim 1, wherein the remote controller controls according to a key code for the device and when the remote controller controls the device, the remote controller transmits the key data, corresponding to the key code of the device accepting the request signal, to the device.

7. A device control system of a remote controller, the device comprising:
a remote controller comprising a key input portion for requesting a device to be controlled by sending a request signal, and
a plurality of devices which transmit an answer signal in response to receiving the control device request signal of the remote controller,
wherein the remote controller controls a corresponding device of the plurality of devices which transmits the answer signal.

8. The device control system of a remote controller according to claim 7, wherein each of the devices comprises a light emitting diode (LED), and the corresponding device indicates that the request signal is received from the remote controller by flickering the LED.

9. The device control system of a remote controller according to claim 7, wherein the remote controller further comprises a light emitting diode (LED) and the remote controller indicates that the answer signal is received from the corresponding device by flickering the LED of the remote controller.

10. The device control system of a remote controller according to claim 7, wherein the remote controller controls each of the devices according to different key codes for each of the devices, and the remote controller controls by transmitting key data, corresponding to the key code of the corresponding device accepting the request signal, to the corresponding device.

11. A remote controller controlling a plurality of devices, the remote controller comprising:
a key input portion which requests one of the plurality of devices to be controlled by the remote controller by sending a request signal,
wherein the remote controller controls a corresponding device of the plurality of devices which transmits an answer signal in response to receiving the request signal of the remote controller.

12. The remote controller according to claim 11, wherein the remote controller further comprises a light emitting diode (LED) and the remote controller indicates that the answer signal is received from the corresponding device by flickering the LED.

13. The remote controller according to claim 11, wherein the remote controller controls each of the plurality of devices according to different key codes for each of the devices, and the remote controller controls by transmitting key data, corresponding to the key code of the corresponding device accepting the request signal, to the corresponding device.

14. A device to be controlled by a remote controller, the device comprising:
a two-way interface through which the device receives a request signal; and
a message communication synchronization unit through which the device transmits an answer signal to the remote controller in response to the request signal, wherein the answer signal indicates that the device accepts a request to be controlled by the remote controller.

15. The device according to claim 14, wherein the device comprises a light emitting diode (LED), and the device indicates that the request signal is received from the remote controller by flickering the LED.

16. The device according to claim 14, wherein the answer signal includes a device information of device.
